# EUROPÄISCHE PATENTSCHRIFT

(11) **EP 0 873 971 B1**
(45) Veröffentlichungstag und Bekanntmachung des Hinweises auf die Patenterteilung: **07.08.2002**
(21) Anmeldenummer: 98106360.5
(22) Anmeldetag: 07.04.1998
(51) Int. Cl.: C01B 15/10

(54) **Umhüllte Natriumpercarbonatpartikel, Verfahren zu ihrer Herstellung und deren Verwendung**
Coated sodium percarbonate particles, process for producing them and their use
Particules de percarbonate de sodium enrobées, leur procédé de production et leur utilisation

(30) Priorität: 26.04.1997 DE 19717729
(43) Veröffentlichungstag der Anmeldung: 28.10.1998
(73) Patentinhaber: Degussa AG, 40474 Düsseldorf (DE)
(72) Erfinder: Schütte, Rüdiger, Dr., 60325 Frankfurt (DE); Pelgrims, Ivan, 2550 Kontich (BE); Kaiser, Lothar, 63150 Heusenstamm (DE); Bewersdorf, Martin, Dr., 63571 Gelnhausen (DE)

(56) Entgegenhaltungen:
- WO-A-95/15292
- WO-A-97/19890

## Beschreibung

Die Erfindung richtet sich auf umhüllte Natriumpercarbonatpartikel aus einem Kern aus in wäßriger Phase durch Kristallisation hergestelltem Natriumpercarbonat und einer den Kern umgebenden festhaftenden zweischichtigen Umhüllung. Die erfindungsgemäß mittels eines Wirbelschicht-Sprühverfahrens umhüllten Natriumpercarbonatpartikel zeichnen sich durch eine hohe Aktivsauerstoffstabilität in Waschmitteln, ferner durch eine hohe Abriebsbeständigkeit und gute Siliereigenschaften aus. Die Erfindung richtet sich ferner auf die Verwendung der umhüllten Natriumpercarbonatpartikel in Wasch-, Reinigungs- und Bleichmitteln.

Natriumpercarbonat (2 Na₂CO₃ · 3 H₂O₂), das sowohl durch Kristallisation in wäßriger Phase - siehe zum Beispiel DE-PS 28 00 760 - als auch durch Wirbelschicht-Sprühverfahren erhältlich ist - siehe zum Beispiel DE-A 43 29 205 -, findet als Aktivsauerstoffkomponente in Wasch-, Bleich- und Reinigungsmitteln Verwendung. Aufgrund der ungenügenden Lagerstabilität des Natriumpercarbonats in warm-feuchter Umgebung sowie in Gegenwart verschiedener Wasch- und Reinigungsmittelkomponenten muß Natriumpercarbonat gegen den Verlust an Aktivsauerstoff (Oa) stabilisiert werden. Ein wesentliches Prinzip zur Stabilisierung besteht darin, die Natriumpercarbonatteilchen mit einer Hülle aus stabilisierend wirkenden Komponenten zu umgeben.

Aus der EP-A 0 654 440 ist bekannt, die Abriebsbeständigkeit und gleichzeitig die Lagerbeständigkeit von durch Kristallisation hergestelltem Natriumpercarbonat durch Umhüllen mit Natriumpercarbonat in der Wirbelschicht zu erhöhen. Die Umhüllung erfolgt durch Besprühen der Natriumpercarbonat-Partikel mit einer im wesentlichen Natriumpercarbonat enthaltenden wäßrigen Lösung oder gleichzeitig mit einer im wesentlichen Soda und einer im wesentlichen Wasserstoffperoxid enthaltenden wäßrigen Lösung, wobei Soda und H₂O₂ im wesentlichen im Molverhältnis 2 zu 3 eingesetzt werden, in einer Wirbelschicht unter Aufrechterhaltung einer Wirbelschichttemperatur im Bereich von 40 bis 95 °C und Verdampfen von Wasser. Obgleich die Stoffdaten des mit Natriumpercarbonat in der Wirbelschicht umhüllten Natriumpercarbonats, dessen Kern aus kristallisiertem Natriumpercarbonat besteht, gegenüber reinem Kristallisat deutlich verbessert sind, besteht ein Interesse daran, die Aktivsauerstoffstabilität in Wasch- und Reinigungsmitteln weiter zu erhöhen.

Verschiedene Verfahren zur Stabilitätserhöhung durch Umhülllung sind bekannt:

Das GB-Patent 174 891 lehrt, Persauerstoffverbindungen durch Umhüllung mit Wasserglas zu stabilisieren. Bei Natriumpercarbonat läßt sich aber hiermit keine ausreichende Stabilisierung erzielen. Weiterhin wird durch die Umhüllung mit Wasserglas-haltigen Hüllsubstanzen die Silierfähigkeit wegen verminderter Backneigung erheblich vergrößert. Unter Hinweis auf die Umhüllung von kristallwasserhaltiger Soda wird in diesem Dokument auch Glauber's Salz, also Natriumsulfatdekahydrat, als mögliche Hüllkomponente genannt. Die Umhüllung von Natriumpercarbonat mit einer Schicht Natriumsulfat wird durch dieses Dokument aber nicht nahegelegt.

In der DE-OS 24 17 572 wird ein in einer Wirbelschicht umhülltes Natriumpercarbonat offenbart, wobei die Hüllsubstanz eine gemischte Verbindung ist, die durch Kristallisation von Natriumcarbonat oder -bicarbonat mit Natriumsulfat gebildet worden ist. Gemäß DE-Patent 26 22 610 enthält die einschichtige Umhüllung außer Natriumsulfat und Natriumcarbonat zusätzlich ein Natriumsilikat. Trotz verbesserter Stabilität der so umhüllten Natriumpercarbonatpartikel nimmt der Aktivsauerstoffgehalt bei längerer Lagerung in Gegenwart eines Waschmittelpulvers noch zu stark ab. Zusätzlich wurde festgestellt, daß umhüllte Natriumpercarbonatpartikel mit Soda in der äußersten Schicht ein unbefriedigendes Silierverhalten und damit schlechtes Fließverhalten nach längerer Lagerzeit zeigen.

Gemäß DE-OS 43 15 380 besteht das Hüllmaterial eines umhüllten Natriumpercarbonats, dessen Kern ein Natriumpercarbonat-Kristallisat ist, aus einem Mineralsalzgemisch aus im wesentlichen Alkalimetallsulfat und Alkalimetallchlorid. Eine Anregung, Natriumsulfat als alleiniges Hüllmaterial zu verwenden, läßt sich diesem Dokument nicht entnehmen.

Eine ausschließlich Magnesiumsalze, wie Magnesiumsulfat, enthaltende Umhüllung gemäß US-Patent 4,325,933 entspricht nicht mehr den derzeitigen Anforderungen an die Aktivsauerstoffstabilität. Demgemäß richten sich die WO 95/02555 und die EP-A 0 623 553 auf umhüllte Natriumpercarbonatpartikel, deren Umhüllung außer Magnesiumsulfat und einem Silikat zusätzlich Soda beziehungsweise ein Alkalimetallsalz aus der Reihe der Carbonate, Bicarbonate und Sulfate enthält. Die ein- oder mehrschichtige Umhüllung führt zwar zu einer sehr guten Aktivsauerstoffstabilität, nachteilig ist jedoch das Erfordernis, drei verschiedene Hüllkomponenten einsetzen zu müssen.

Die WO 95/15291 lehrt ein Verfahren zur Herstellung von Natriumpercarbonatpartikeln mit verbesserter Stabilität, wobei Natriumpercarbonat in einer Wirbelschicht mit einem CO₂-reichen Gas und Feuchtigkeit kontaktiert wird, um eine geschlossene Natriumbicarbonatschicht auf den Natriumpercarbonatpartikeln auszubilden. Auf die Natriumbicarbonatschicht kann zusätzlich eine Schicht aus Natriumsulfat aufgebracht werden.

Die WO 97/19890 lehrt umhüllte Natriumpercarbonatpartikel, deren Kern ein Wirbelschicht-Sprühgranulat ist und deren ein- oder zweischichtige Hülle als äußerste Hüllschicht eine solche aus im wesentlichen Natriumsulfat aufweist.

Das Verfahren gemäß WO 95/15292 richtet sich auf die Stabilisierung von Natriumpercarbonat durch Umhüllung eines Borsäure enthaltenden Hüllmaterials, das auch Natriumsulfat enthalten kann.

Aufgabe der vorliegenden Erfindung ist es, weitere umhüllte Natriumpercarbonatpartikel zur Verfügung zu stellen, welche eine sehr gute Aktivsauerstoffstabilität in Wasch-, Bleichund Reinigungsmitteln und ein gutes Silierverhalten zeigen. Desweiteren sollte die geforderte Kombination der Stoffeigenschaften mit einer Umhüllung erhältlich sein, welche möglichst wenig den Aktivsauerstoffgehalt mindert.

Die Aufgabe wird gelöst durch umhüllte Natriumpercarbonatpartikel aus einem Kern aus in wäßriger Phase durch Kristallisation hergestelltem Natriumpercarbonat und einer diesen Kern umgebenden festhaftenden, durch ein Wirbelschichtsprühverfahren aufgebrachten zweischichtigen Umhüllung, wobei die innere Schicht im wesentlichen aus Natriumpercarbonat in einer Menge von 5 bis 50 Gew.-% und die äußere Schicht aus im wesentlichen Natriumsulfat, das teilweise hydratisiert sein kann, in einer Menge von 0,5 bis 25 Gew.-%, berechnet wasserfrei, jeweils bezogen auf die zweischichtig umhüllten Partikel, besteht.

Die weiteren Ansprüche richten sich auf bevorzugte Ausführungsformen der umhüllten Natriumpercarbonatpartikel sowie ein Verfahren zu ihrer Herstellung und deren Verwendung.

Der Kern der zweischichtig umhüllten Natriumpercarbonatpartikel besteht im wesentlichen aus Natriumpercarbonat-Kristallisat. Unter dem Begriff "im wesentlichen" wird verstanden, daß der zu umhüllende Kern herstellungsbedingt, also bei der Kristallisation in wäßriger Phase, in geringem Umfang Hilfsstoffe enthalten kann. Die Hilfsstoffe sind üblicherweise in einer Menge von weniger als 10 Gew.-%, üblicherweise weniger als 5 Gew.-%, bezogen auf den Kern, enthalten. Bei den Hilfsstoffen handelt es sich insbesondere um Aktivsauerstoffstabilisatoren, wie beispielsweise Silikate und/oder Magnesiumverbindungen, Borverbindungen sowie Komplexbildner.

Der erfindungsgemäß zu umhüllende Kern aus im wesentlichen Natriumpercarbonat kann nach einem üblichen Kristallisationsverfahren, etwa demjenigen der eingangs zitierten DE-PS 28 00 760, erzeugt worden sein. Dieses umfaßt die Umsetzung von Wasserstoffperoxid mit Natriumcarbonat im Molverhältnis von etwa 2 zu 3 in wäßriger Phase und Kristallisation in Gegenwart üblicher Kristallisationshilfsmittel.

Die erste Schicht, bei welcher es sich wie beim Kern im wesentlichen um Natriumpercarbonat handelt, wird durch Wirbelschicht-Sprühgranulation, wie sie in der EP-A 0 654 440 beschrieben ist, auf den Kern aufgebracht. Die zerklüftete Oberfläche des Kerns wird durch die erste Schicht ebener und so dem zersetzenden Angriff teilweise entzogen. Der Begriff "im wesentlichen" bedeutet, daß übliche Aktivsauerstoffstabilisatoren in wirksamer Konzentration, im allgemeinen insgesamt weniger als 5 Gew.-%, bezogen auf die Natriumpercarbonatumhüllung, anwesend sein können, weil derartige Stabilisatoren mit den zu versprühenden Lösungen eingebracht werden.

Erfindungsgemäß besteht die äußere Hüllschicht aus im wesentlichen Natriumsulfat, das teilweise hydratisiert sein kann. Diese Schicht wird unter Einsatz einer im wesentlichen nur Natriumsulfat enthaltenden wäßrigen Lösung in der Wirbelschicht auf den mit Natriumpercarbonat in der Wirbelschicht umhüllten Natriumpercarbonat-Kern aufgebracht.

Bekanntlich bildet Natriumsulfat verschiedene Hydrate, etwa das Dekahydrat, welche in der Hüllschicht enthalten sein können. Um eine gute stabilisierende Wirkung entfalten zu können, wird bei der Herstellung versucht, ein Produkt mit einem möglichst niedrigen Hydratisierungsgrad zu erhalten. Aus diesem Grund wird die Wirbelschichttemperatur beim Aufbringen der äußersten Hüllschicht oberhalb der Umwandlungstemperatur des Dekahydrats (32,4 °C) gehalten.

In der noch nicht veröffentlichten DE-Patentanmeldung 195 44 293.8 werden zwar auch mit Natriumsulfat als äußerster Schicht umhüllte Natriumpercarbonatpartikel beschrieben, deren Kern Natriumpercarbonat-Kristallisat vorzugsweise aber Natriumpercarbonat-Wirbelschichtgranulat ist. Es wird jedoch nicht offenbart, Natriumpercarbonat-Kristallisat in der Wirbelschicht zunächst mit Natriumpercarbonat und dann mit Natriumsulfat zu umhüllen.

Der Gewichtsanteil der ersten Hüllschicht, also der Natriumpercarbonatschicht, kann zwischen 1 und 100 Gew.-%, vorzugsweise zwischen 5 und 50 Gew.-% und insbesondere zwischen 10 und 30 Gew.-%, jeweils bezogen auf die zweischichtig umhüllten Partikel, ausmachen.

Der Gewichtsanteil der zweiten, also der im wesentlichen aus Natriumsulfat bestehenden Schicht liegt üblicherweise zwischen 0,5 und 25 Gew.-%, berechnet hydratfrei, bezogen auf das zweischichtig umhüllte Natriumpercarbonat. Vorzugsweise beläuft sich die Hüllmenge auf 1 bis 15 Gew.-%, insbesondere 2 bis 10 Gew.-%, jeweils berechnet hydratfrei und bezogen auf das zweischichtig umhüllte Natriumpercarbonat.

Erfindungsgemäße zweischichtig umhüllte Natriumpercarbonatpartikel lassen sich dadurch herstellen, daß man (i) auf in einer Wirbelschicht befindliche nicht-umhüllte Partikel aus in wäßriger Phase durch Kristallisation gewonnenem Natriumpercarbonat unter Aufrechterhaltung einer Wirbelschichttemperatur von 35 bis 100 °C und gleichzeitigem Verdampfen von Wasser eine wäßrige Lösung aus im wesentlichen Natriumpercarbonat oder gleichzeitig eine wäßrige Lösung aus im wesentlichen Soda und eine wäßrige Lösung aus im wesentlichen Wasserstoffperoxid im Molverhältnis von im wesentlichen 2 zu 3 aufsprüht und (ii) auf die erhaltenen einschichtig umhüllten Partikel unter Aufrechterhaltung einer Wirbelschichttemperatur von 35 bis 100 °C und gleichzeitigem Verdampfen von Wasser eine wäßrige Lösung von im wesentlichen Natriumsulfat aufsprüht.

Das Verfahren zum Aufbringen einer Umhüllung auf Natriumpercarbonat durch Aufsprühen von Hüllkomponenten enthaltenden wäßrigen Lösungen auf in einer Wirbelschicht befindliche umhüllte oder nicht-umhüllte Natriumpercarbonatpartikel ist an sich bekannt - es wird beispielhaft auf die EP-A 0 623 553, WO 95/02555, DE-PS 26 22 610 und EP-A 0 654 440 verwiesen. In diesen Dokumenten wird aber die alleinige Verwendung von Natriumsulfat als einzige stabilisierende Komponente einer Hüllschicht, auf durch Kristallisation gewonnenem Natriumpercarbonat, das in der Wirbelschicht mit Natriumpercarbonat umhüllt wurde, nicht offenbart oder nahegelegt. Zweckmäßigerweise wird die benötigte Trocknungsluft über Rauchgas bereitgestellt.

Das Aufbringen der Natriumpercarbonat-Hüllschicht erfolgt entsprechend EP-A 0 654 440. Zur Herstellung der äußeren Schicht wird als aufzusprühende Na₂SO₄-Lösung vorzugsweise eine solche mit einem Gehalt zwischen 10 und 30 Gew.-% Natriumsulfat verwendet. Diese Lösung wird mittels einer oder mehrerer Sprühdüsen auf die Partikel in der Wirbelschicht aufgesprüht. Vorzugsweise erfolgt das Aufsprühen bei einer Wirbelschichttemperatur von 50 bis 80 °C. Das zur Fluidisierung und Trocknung während beider Stufen eingesetzte Gas, meistens Luft, hat üblicherweise eine Temperatur zwischen 50 und 200 °C, insbesondere 80 bis 120 °C.

Das Aufbringen der inneren und äußeren Hüllschicht kann in üblichen Apparaturen zur Wirbelschicht-Sprühgranulation erfolgen, beispielweise in im wesentlichen runden Wirbelschichtapparaturen oder in einer Fließrinne. Während oder nach dem Aufbringen der äußersten Hüllschicht kann das in der Wirbelschicht befindliche oder aus dieser entnommene Material einem üblichen Sichtprozeß unterworfen werden.

Wie aus dem Beispiel und den Vergleichsbeispielen hervorgeht, hat die Kombination der in der Wirbelschicht aufgebrachten Hüllschichten einen positiven Einfluß auf die Aktivsauerstoffstabilität und die Silierfähigkeit. Im Rahmen der Entwicklung von Natriumpercarbonat mit guter Aktivsauerstoffstabilität wurde es, da Natriumsulfat als einzige Hüllkomponente auf Natriumpercarbonat-Kristallisat zu einer unzureichenden Erhöhung der Aktivsauerstoffstabilität führte, für nötig erachtet, Natriumsulfat in Form von Mischsalzen oder als Bestandteil einer Mehrstoffkomposition einzusetzen. Es war daher überraschend, daß durch den erfindungsgemäßen Aufbau der Natriumpercarbonatpartikel mit Natriumsulfat als im wesentlichen alleinigem Bestandteil der äußersten Hüllschicht sowohl eine sehr gute Aktivsauerstoffstabilität als auch zusätzlich eine hervorragende Silierfähigkeit erzielt werden. Durch die gute Silierfähigkeit erfindungsgemäßer Natriumpercarbonatpartikel kommt es zu keinen Verklumpungen und damit zu keinen Entleerungsstörungen und keiner Brückenbildung in Silos sowie zu keinen Handhabungs- und Dosierproblemen bei Großund Kleingebinden.

Die erfindungsgemäß umhüllten Natriumpercarbonatpartikel lassen sich als Bleichkomponente in Wasch-, Reinigungs-, Bleich- und Desinfektionsmitteln verwenden. Zu den genannten Reinigungsmitteln sind außer üblichen Putz- und Scheuermitteln auch Geschirrspülmittel und Zahnprothesenreiniger zu rechnen. Derartige Wasch-, Reinigungs-, Bleich- und Desinfektionsmittelzusammensetzungen zeichnen sich dadurch aus, daß das darin enthaltene umhüllte Natriumpercarbonat in Gegenwart von üblichen Bestandteilen, wie insbesondere Zeolithen, eine unerwartet hohe Lagerstabilität aufweist, so daß es während der üblichen Lagerung derartiger Zusammensetzungen nur zu einem sehr langsamen Verlust an Aktivsauerstoff kommt. Die in Betracht kommenden Wasch-, Reinigungs-, Bleich- und Desinfektionsmittel bestehen aus 1 bis 99 Gew.-% der erfindungsgemäß umhüllten Natriumpercarbonatpartikel oder einem Gemisch aus diesen und anderen Aktivsauerstoffbleichmitteln und aus der restlichen Menge bis 100 Gew.-% anderen üblichen Komponenten derartiger Mittel. Unter diesen Komponenten sind insbesondere zu nennen:
1. Oberflächenaktive Mittel aus der Reihe der kationischen, anionischen, nicht-ionischen, amphoteren oder ampholytischen oberflächenaktiven Mittel.
2. Anorganische und/oder organische Builder, deren Hauptwirkung darin besteht, die für die Härte des Wassers verantwortlichen Metallionen zu sequestrieren beziehungsweise komplexieren, beispielsweise Zeolithe, Schichtsilikate, Polyphosphate, Aminopolyessigsäuren und Aminopolyphosphonsäuren sowie Polyoxycarbonsäuren.
3. Alkalische wirkende Komponenten, wie Alkanolamine, und anorganische Elektrolyte, wie Silikate, Carbonate und Sulfate.
4. Bleichaktivatoren aus der Reihe der N-Acylverbindungen und O-Acyl-verbindungen, wie Tetraacetylethylendiamin (TAED) und Nonanoyloxybenzolsulfonat (NOBS).
5. Weitere Bestandteile der Mittel können sein, Stabilisatoren für Peroxide, wie insbesondere Magnesiumsalze, Antiredepositionsmittel, optische Aufheller, Schauminhibitoren, Enzyme, Desinfektionsmittel, Korrosionsinhibitoren, Duftstoffe, Farbstoffe und Mittel zur Regulierung des pH-Wertes. Bezüglich einzelner unter die Stoffklassen 1 bis 5 zählender Verbindungen wird beispielhaft auf die DE-OS 33 21 082, Seiten 14-30 verwiesen.

### Beispiele und Vergleichsbeispiele

a) Allgemeine Vorschrift zur Aufbringung einer Natriumsulfat-Umhüllung auf umhülltes oder nicht-umhülltes Natriumpercarbonat in der Wirbelschicht:
   In einem Wirbelschichttrockner wird unter Verwendung von Trocknungsluft (Zulufttemperatur 100 bis 110 °C) eine Wirbelschicht aus dem zu umhüllenden, gegebenenfalls bereits eine Hüllschicht aufweisenden Natriumpercarbonat (NaPc) aufgebaut. Auf die in der Wirbelschicht befindlichen Partikel wird eine 20 gew.-%ige wäßrige Natriumsulfatlösung aufgesprüht, wobei die Temperatur der Wirbelschicht im Bereich von 50 bis 60 °C gehalten wird; nachgetrocknet wird bei 80 bis 90 °C. Das Aufsprühen der Lösung erfolgt unter Verwendung von üblichen Zweistoffdüsen mit Luft als Treibmittel.
b) Bestimmung der Lagerstabilität von erfindungsgemäß und zu Vergleichszwecken hergestellten umhüllten Natriumpercarbonatpartikeln in Waschmittelabmischungen (= Oa-Erhalt (%)):
   Ein phosphatfreies aber zeolithhaltiges Waschmittelpulver, Aktivator TAED und ein umhülltes beziehungsweise nicht-umhülltes Natriumpercarbonat (NaPc) werden in einer solchen Menge gemischt, daß das Gemisch 5 % TAED enthält und der Oa-Gehalt etwa 2,35 Gew.-% beträgt. Bestandteile im Waschmittelpulver in Gew.-%:
      Anionische Tenside 12
      Nichtionische Tenside 8
      Zeolith A 36
      Soda 10
      Na-silikate 3
      Rest incl. Feuchte 31.
   800 g des jeweiligen Gemischs werden in handelsüblichen, wasserabweisend imprägnierten und verklebten E1-Waschmittelpaketen bei 30 °C und 80 % relativer Feuchte im Klimaschrank gelagert. Pro Entnahmetermin - nach 4 und 8 Wochen - wird ein Paket gelagert. Der Oa-Gehalt wird in üblicher Weise permanganometrisch bestimmt; aus dem Ausgangs-Oa-Gehalt und dem Oa-Gehalt nach 4 und 8 Wochen wird der jeweilige Oa-Erhalt in % ermittelt.

### Vergleichsbeispiel 1 (VB 1)

Durch ein Kristallisationsverfahren unter Verwendung einer Kochsalz und Natriumhexametaphosphat enthaltenden wäßrigen Phase gewonnenes Natriumpercarbonat mit einer Restfeuchte von 8 Gew.-% wurde in einem rinnenförmigen Wirbelschichttrockner getrocknet. Aktivsauerstoffgehalt (Oa): 13,9 %; Lösezeit für 2 g/l bei 15 °C 1 Minute.

### Vergleichsbeispiel 2 (VB 2)

Hergestellt wurde ein Wirbelschichtgranulat (= WS-Granulat) gemäß DE-A 43 29 205. Oa-Gehalt 14,2 %.

### Vergleichsbeispiel 3 (VB 3) und 4 (VB 4)

Natriumpercarbonat des Vergleichsbeispiels 1 wurde in einer Fließbettrinne, umfassend eine Sprühzone und eine Trocknungszone, in der Wirbelschicht mit 10 Gew.-% (= VB 3) beziehungsweise 25 Gew.-% (= VB 4) Natriumpercarbonat, bezogen auf den Kern, umhüllt. Bei der Sprühlösung handelte es sich um ein Gemisch aus einer wäßrigen Sodalösung (30 Gew.-%) und wäßrigen Wasserstoffperoxidlösung (70 Gew.-%), welche mittels einer Dreistoffdüse mit externer Mischung der Lösungen und Luft als Treibmittel versprüht wurden; das Molverhältnis Na₂CO₃ zu H₂O₂ in den beiden Lösungen betrug 2 zu 3, der Natriumpercarbonatgehalt im Gemisch 36,9 Gew.-%. Die Temperatur der Wirbelschicht in der Sprühzone betrug 55 °C, in der Trocknungszone 65 °C. VB 3 : Oa = 13,9 %; VB 4 : Oa = 14,0 %.

### Vergleichsbeispiele 5 und 6

Mit 10 Gew.-% Natriumsulfat, bezogen auf den Natriumpercarbonatkern, beschichtet wurde Natriumpercarbonat-Kristallisat gemäß VB 1 (= VB 5); Natriumpercarbonat-Wirbelschichtsprühgranulat gemäß VB 2 wurde entsprechend mit 5 Gew.-% Natriumsulfat beschichtet (= VB 6). VB 6 entspricht Beispiel 1 der unveröffentlichten DE-Patentanmeldung 195 44 293.8.

### Beispiele 1 und 2

Natriumpercarbonat der Vergleichsbeispiele 3 und 4 wurde mit jeweils 5 Gew.-% Na₂SO₄ umhüllt.

Der Oa-Erhalt der Beispiele und Vergleichsbeispiele folgt aus der Tabelle. Sämtliche Produkte mit Na₂SO₄ in der äußersten Hülle verklumpen nicht und zeigen einen hohen Abriebwiderstand.

**Tabelle**

| Nr. | NaPc-Kern | äußere Hülle / Gew.-% | Oa-Gehalt (%) | Oa-Erhalt im Waschmittel nach 4 Wochen |
|---|---|---|---|---|
| VB 1 | Kristallisat | - | 13,9 | 30 |
| VB 2 | WS-Granulat | - | 14,2 | 52 |
| VB 3 | Kristallisat | NaPc / 10 | 13,9 | 35 |
| VB 4 | Kristallisat | NaPc / 25 | 14,0 | 50 |
| VB 5 | Kristallisat (= VB 1) | Na₂SO₄ / 10 | 12,4 | 70 |
| VB 6 | WS-Granulat (= VB 2) | Na₂SO₄ / 5 | 13,5 | 95 |
| B 1 | VB 3 | Na₂SO₄ / 5 | 13,2 | 75 |
| B 2 | VB 4 | Na₂SO₄ / 5 | 13,3 | 90 |

## Patentansprüche

1. Umhüllte Natriumpercarbonatpartikel aus einem Kern aus in wäßriger Phase durch Kristallisation hergestelltem Natriumpercarbonat und einer diesen Kern umgebenden festhaftenden, durch ein Wirbelschichtsprühverfahren aufgebrachten zweischichtigen Umhüllung, wobei die innere Schicht im wesentlichen aus Natriumpercarbonat in einer Menge von 5 bis 50 Gew.-% und die äußere Schicht aus im wesentlichen Natriumsulfat, das teilweise hydratisiert sein kann, in einer Menge von 0,5 bis 25 Gew.-%, berechnet wasserfrei, jeweils bezogen auf die zweischichtig umhüllten Partikel, besteht.

2. Umhüllte Natriumpercarbonatpartikel nach Anspruch 1,
**dadurch gekennzeichnet,**
**daß** die innere Schicht 10 bis 30 Gew.-% und die äußere Schicht 2 bis 10 Gew.-%, jeweils bezogen auf die zweischichtig umhüllten Partikel, ausmacht.

3. Verfahren zur Herstellung zweischichtig umhüllter Natriumpercarbonatpartikel gemäß Anspruch 1 oder 2,
**dadurch gekennzeichnet,**
**daß** man (i) auf in einer Wirbelschicht befindliche nicht-umhüllte Partikel aus in wäßriger Phase durch Kristallisation gewonnenem Natriumpercarbonat unter Aufrechterhaltung einer Wirbelschichttemperatur von 35 bis 100 °C und gleichzeitigem Verdampfen von Wasser eine wäßrige Lösung aus im wesentlichen Natriumpercarbonat oder gleichzeitig eine wäßrige Lösung aus im wesentlichen Soda und eine wäßrige Lösung aus im wesentlichen Wasserstoffperoxid im Molverhältnis von im wesentlichen 2 zu 3 aufsprüht und (ii) auf die erhaltenen einschichtig umhüllten Partikel unter Aufrechterhaltung einer Wirbelschichttemperatur von 35 bis 100 °C und gleichzeitigem Verdampfen von Wasser eine wäßrige Lösung von im wesentlichen Natriumsulfat aufsprüht.

## Claims

1. Coated sodium percarbonate particles consisting of a core of sodium percarbonate produced in the aqueous phase by crystallisation and a firmly adhering, two-layer coating surrounding this core, applied by a fluidised bed spray process, the inner layer substantially consisting of sodium percarbonate in a quantity of 5 to 50 wt.% and the outer layer substantially consisting of sodium sulphate, which may be partially hydrated, in a quantity of 0.5 to 25 wt.%, calculated as anhydrous, based on the particles coated with two layers in each case.

2. Coated sodium percarbonate particles according to claim 1,
**characterised in that**
the inner layer constitutes 10 to 30 wt.% and the outer layer 2 to 10 wt.%, based on the particles coated with two layers in each case.

3. Process for the production of sodium percarbonate particles coated with two layers according to claim 1 or 2,
**characterised in that**
(i) an aqueous solution substantially of sodium percarbonate or, at the same time, an aqueous solution substantially of soda and an aqueous solution substantially of hydrogen peroxide, in a molar ratio substantially of 2 to 3, is sprayed on to uncoated particles, located in a fluidised bed, consisting of sodium percarbonate obtained in the aqueous phase by crystallisation, maintaining a fluidised bed temperature of 35 to 100°C and with simultaneous evaporation of water, and (ii) an aqueous solution substantially of sodium sulphate is sprayed on to the particles coated with one layer which are obtained, maintaining a fluidised bed temperature of 35 to 100°C and with simultaneous evaporation of water.

## Revendications

1. Particules de percarbonate de sodium enrobées formées d'un noyau de percarbonate de sodium produit par cristallisation en phase aqueuse et d'un enrobage en deux couches entourant ce noyau, adhérent solidement, appliqué par un procédé de pulvérisation en lit fluidifié, dans lesquelles la couche interne consiste pour l'essentiel en du percarbonate de sodium en une quantité allant de 5 à 50 % en poids et la couche externe pour l'essentiel en du sulfate de sodium qui peut être en partie hydraté, en une quantité allant de 0,5 à 25 % en poids, calculé en produit anhydre, à chaque fois rapporté aux particules enrobées en deux couches.

2. Particules de percarbonate de sodium enrobées selon la revendication 1,
**caractérisées en ce que**
la couche interne représente de 10 à 30 % en poids et la couche externe de 2 à 10 % en poids, à chaque fois rapporté aux particules enrobées en deux couches.

3. Procédé de production de particules de percarbonate de sodium enrobées en deux couches, conformément à la revendication 1 ou à la revendication 2,
**caractérisé en ce qu'**
on pulvérise
(i) sur les particules non enrobées qui se trouvent dans un lit fluidifié à base de percarbonate de sodium produit par cristallisation en phase aqueuse, tout en maintenant une température de lit fluidifié allant de 35 à 100°C et en évaporant en même temps l'eau, une solution aqueuse à base pour l'essentiel de percarbonate de sodium ou en même temps une solution aqueuse à base, pour l'essentiel, de carbonate de sodium et d'une solution aqueuse à base, pour l'essentiel, de peroxyde d'hydrogène dans un rapport molaire de, pour l'essentiel, 2 pour 3, et
(ii) sur les particules enrobées obtenues à une couche tout en maintenant une température de lit fluidifié allant de 35 °C à 100°C, et en évaporant simultanément l'eau, une solution aqueuse pour l'essentiel de sulfate de sodium.
